# EUROPÄISCHE PATENTSCHRIFT

(11) **EP 0 694 420 B1**
(45) Veröffentlichungstag und Bekanntmachung des Hinweises auf die Patenterteilung: **06.05.1998**
(21) Anmeldenummer: 95111362.0
(22) Anmeldetag: 20.07.1995
(51) Int. Cl.: B60B 3/14

(54) **Leichtmetallrad**
Light-alloy wheel
Roue en alliage léger

(30) Priorität: 29.07.1994 DE 4426981
(43) Veröffentlichungstag der Anmeldung: 31.01.1996
(73) Patentinhaber: ADAM OPEL AG, 65423 Rüsselsheim (DE)
(72) Erfinder: Gigla, Joachim, Dipl.-Ing., D-55296 Lörzweiler (DE)
(74) Vertreter: Bergerin, Ralf, Dipl.-Ing.

(56) Entgegenhaltungen:
- DE-A- 2 207 771
- DE-A- 2 749 534
- DE-C- 4 227 259
- DE-C- 4 306 484
- DE-U- 9 419 359
- PATENT ABSTRACTS OF JAPAN vol. 7 no. 116 (M-216) ,20.Mai 1983 & JP-A-58 036701 (TOYOTA JIDOSHA KOGYO KK) 3.März 1983,
- PATENT ABSTRACTS OF JAPAN vol. 17 no. 248 (M-1411) ,18.Mai 1993 & JP-A-04 368202 (HONDA MOTOR CO.) 21.Dezember 1992,

## Beschreibung

Die Erfindung betrifft ein Leichtmetallrad, insbesondere für Kraftfahrzeuge, bei dem zumindest der Felgenteller im wesentlichen aus einem beim direkten Kontakt mit Stahl- oder Stahlgußteilen der Radanlage korrodierenden Leichtmetall, beispielsweise Magnesium, besteht und im Kontaktbereich mit der Radanlage isoliert ist.

Bei derartigen Leichtmetallrädern wird durch die Isolierung ein direkter Kontakt zwischen dem Felgenteller und den Stahlteilen der Radanlage, beispielsweise einer Nabe, vermieden, damit sich an der Verbindungsstelle keine Kontaktkorrosion bildet. Dazu werden oft ringförmige Distanzscheiben aus Aluminium oder einem anderen geeigneten Werkstoff verwendet, welche im Bereich der Befestigungsbohrungen zwischen dem Felgenteller und der Nabe angeordnet werden.

Aus der DE 43 06 484 C1 ist eine Anordnung zur Vermeidung von Kontaktkorrosionen bei Magnesiumrädern bekannt, bei der am Felgenteller die gesamte Nabenanlagefläche mit einer ringförmigen Platte aus Aluminium abgedeckt ist und zusätzlich an der radialen Außenkante der Nabenanlagefläche ein Ring aus Aluminium mit etwa quadratischem Querschnitt bündig abschließend mit der Außenkontur des Magnesiumrades eingesetzt ist. Damit wird der Abstand zwischen der Radanlage und dem Magnesiummaterial des Rades soweit vergrößert, daß keine Kontaktkorrosion entstehen kann.

Bei einer anderen Anordnung zur Vermeidung von Kontaktkorrosionen bei Magnesiumrädern gemäß der DE 42 27 259 C1 ist zwischen der innenseitigen Anlagefläche des Magnesiumrades und der Radanlage im Bereich der Befestigungsbohrungen eine ringförmige Distanzscheibe aus Aluminium eingefügt und als Mittenzentrierung in die Nabenbohrung des Magnesiumrades ein ringförmiger Adapter aus Kunststoff eingeklemmt, welcher die radial innenliegende Umfangsfläche der Distanzscheibe abdeckt und diese gegenüber der Nabe zentriert. Um die Distanzscheibe gegenüber den Befestigungsbohrungen am Felgenteller zu positionieren, sind bei dieser Lösung in die Befestigungsbohrungen zwischen dem Felgenteller und der Distanzscheibe Zentrierhülsen aus Kunststoff eingesetzt.

Die bekannten Anordnungen zur Vermeidung von Kontaktkorrosionen haben jedoch den Nachteil, daß am Felgenteller nur der Kontaktbereich zu der Radanlage isoliert ist. Da die Befestigungsbohrungen gegenüber den Radschrauben nicht isoliert sind, müssen zur Befestigung des Rades Radschrauben aus einem hochwertigen Metall wie beispielsweise Titan verwendet werden, die keine Korrosion an den Befestigungsbohrungen auslösen. Bei einer Nachrüstung von Stahl- bzw. Aluminiumrädern auf Magnesiumräder müssen die Radschrauben ebenfalls ausgetauscht werden, was zu kritischen Verwechslungen führen kann. Wird ein Fahrzeughersteller Magnesiumräder in Serie einführen, so muß wegen den Titanschrauben die Radschraubenvielfalt und der logistische Aufwand (Händlerbestückung, Ersatzteileversorgung) noch weiter erhöht werden.

Die Aufgabe der vorliegenden Erfindung besteht darin, ein Leichtmetallrad der im Oberbegriff des Patentanspruches 1 genannten Art zu schaffen, das die vorstehenden Nachteile nicht aufweist und relativ einfach herstellbar ist.

Erfindungsgemäß wird diese Aufgabe dadurch gelöst, daß der Kontaktbereich des Felgentellers zusammen mit dem Bereich der Befestigungsbohrungen für die Radschrauben aus einem beim direkten Kontakt mit Stahl- oder Stahlgußteilen nicht korrodierenden Leichtmetall, vorzugsweise Aluminium, gebildet ist.

Ein besonderer Vorteil der Verwendung von Aluminium in diesen kritischen Befestigungsbereichen des Leichtmetallrades besteht darin, daß keine Kontaktkorrosion sowohl im Kontaktbereich mit der Radanlage als auch durch Befestigung mit Radschrauben aus Stahl entstehen kann.

Nach einer bevorzugten Ausführungsform der Erfindung ist der Kontaktbereich zusammen mit dem Bereich der Befestigungsbohrungen als eine in den Felgenteller eingesetzte Aluminiumscheibe ausgebildet, wobei Felgenteller und Aluminiumscheibe koaxial zueinander ausgerichtet sind. Die Aluminiumscheibe kann dabei als Guß- oder Schmiedeteil mit allen für die Befestigung an der Radanlage notwendigen Einzelheiten hergestellt und mit dem entsprechend ausgebildeten Felgenteller fest durch Einpressen oder Eingießen verbunden sein.

Die Verbindung zwischen Felgenteller und Aluminiumscheibe kann gemäß einer anderen Ausführungsform auch lösbar gestaltet sein, wenn die Aluminiumscheibe durch Schraubmittel, welche gleichmäßig am Außenumfang der Aluminiumscheibe verteilt sind, mit dem Felgenteller verbunden ist.

Eine besonders vorteilhafte Verbindung zwischen Felgenteller und Aluminiumscheibe wird dadurch erreicht, daß die Aluminiumscheibe an der Verbindungsstelle mit dem Felgenteller rotationssymmetrisch ausgebildet ist. Die Querschnittsform der Verbindungsstelle kann somit entsprechend den Anforderungen an die Festigkeit und Tragfähigkeit des Rades gestaltet werden, wobei die Aluminiumscheibe relativ einfach in den Felgenteller eingesetzt und zentriert werden kann.

Nach einer bevorzugten Ausbildung der Verbindungsstelle zwischen Felgenteller und Aluminiumscheibe ist vorgesehen, daß die Aluminiumscheibe an der Verbindungsstelle mit einer Anschlagfläche versehen ist, welche mit einem Gegenanschlag am Felgenteller zusammenwirkt. Die Anschlagfläche und der Gegenanschlag können durch entsprechende radiale Abstufungen der Durchmesser am Außenumfang der Aluminiumscheibe und am angrenzenden Innenumfang des Felgentellers gebildet werden.

Die Haltbarkeit und die Sicherheit der Verbindung zwischen Felgenteller und Aluminiumscheibe kann wesentlich erhöht werden, wenn am Außenumfang der Aluminiumscheibe und am angrenzenden Innenumfang des Felgentellers eine ineinandergreifende Verzahnung vorgesehen ist. In Abhängigkeit von der Art der Verbindung kann die Verzahnung quer oder parallel zur Achsrichtung des Leichtmetallrades ausgerichtet sein.

Zur Befestigung und/oder Zentrierung des Leichtmetallrades an der Radnabe der Radanlage weist die Aluminiumscheibe eine axiale Bohrung auf, an der eine Zentrierfläche vorgesehen ist, deren Durchmesser etwa dem Durchmesser der Radnabe entspricht.

Die in den Felgenteller eingesetzte Aluminiumscheibe besteht aus einer hochfesten Aluminiumlegierung mit einer im Bereich der Befestigungsbohrungen relativ großen Anlagefläche für die Radschrauben, wobei an der Anlagefläche zur Erhöhung der Flächenpressung die Aluminiumlegierung zusätzlich verdichtet ist.

Diese Maßnahmen, welche bei dieser Ausbildung des Leichtmetallrades für eine sichere Verschraubung mit der Radanlage notwendig sind, können entfallen, wenn gemäß einer Weiterbildung der Erfindung in die Befestigungsbohrungen an sich bekannte Stahlbuchsen eingesetzt werden. Die Stahlbuchsen können in die Aluminiumscheibe jeweils koaxial zu den entsprechenden Befestigungsbohrungen eingepreßt oder eingegossen sein. Da die Stahlbuchsen eine hohe Flächenpressung ermöglichen, kann die Aluminiumscheibe aus gewöhnlichen Aluminiumlegierungen gefertigt werden. Ebenso können zur Befestigung des Leichtmetallrades einheitliche Radschrauben für Räder aus Stahl, Aluminium oder Magnesium verwendet werden.

Die Erfindung läßt zahlreiche Ausführungsformen zu. Zur weiteren Verdeutlichung ihres Grundprinzips ist eine davon in der Zeichnung dargestellt und nachfolgend beschrieben. Die Zeichnung zeigt teilweise schematisch in
- Fig. 1: einen Querschnitt durch das erfindungsgemäße Leichtmetallrad im Kontaktbereich mit der Radanlage;
- Fig. 2: eine Ansicht der Aluminiumscheibe nach Fig. 1, mit eingesetzten Stahlbuchsen.

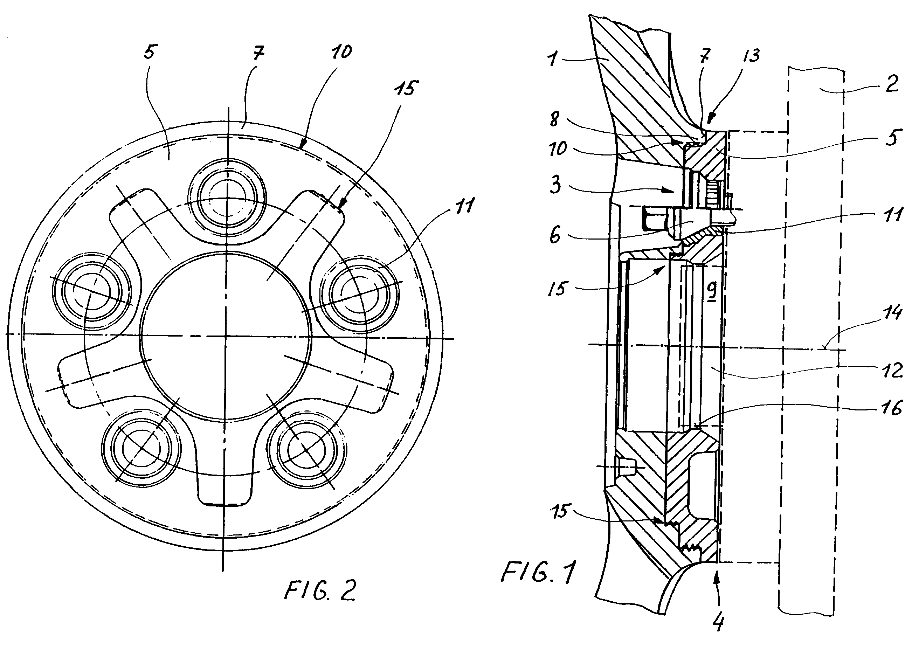

Die Fig. 1 zeigt teilweise einen Querschnitt durch ein aus Magnesium bestehendes Leichtmetallrad, das an einer Radanlage 2 mittels Radschrauben 6 befestigt ist. Die Radanlage 2 ist in Strichlinien dargestellt und enthält üblicherweise zur Befestigung des Leichtmetallrades eine Radnabe 12. Im Kontaktbereich 4 zwischen dem Felgenteller 1 des Magnesiumrades und der Radanlage 2 ist zur Isolierung eine Aluminiumscheibe 5 angeordnet, welche koaxial zum Felgenteller 1 ausgerichtet und durch Eingießen fest mit diesem verbunden ist.

Die Aluminiumscheibe 5 weist an der Verbindungsstelle 13 mit dem Felgenteller 1 eine Anschlagfläche 7 auf, die mit einem Gegenanschlag 8 des Felgentellers 1 zur Anlage kommt. Die Anschlagfläche 7 ist ringförmig ausgebildet und in einer zur Radachse 14 senkrechten Ebene angeordnet. Die Aluminiumscheibe 5 ist im Bereich der Verbindungsstelle 13, wie aus Fig. 2 ersichtlich, rotationssymmetrisch ausgebildet.

Am Außenumfang der Aluminiumscheibe 5 und am angrenzenden Innenumfang des Felgentellers 1 ist zur festen Verbindung mit dem Felgenteller 1 eine ineinandergreifende Verzahnung 10 vorgesehen, die auf einem zylindrischen Umfang etwa quer zur Radachse 14 ausgerichtet ist. An der Aluminiumscheibe 5 sind noch weitere ähnliche Verzahnungen 15 angeordnet.

Die Zentrierung des Leichtmetallrades an der Radanlage 3 erfolgt mittels einer an einer axialen Bohrung 9 vorgesehenen Zentrierfläche 16, deren Durchmesser etwa dem Durchmesser der Radnabe 13 in diesem Bereich entspricht.

Um eine hohe Flächenpressung bei der Befestigung des Leichtmetallrades zu erreichen, sind in die Aluminiumscheibe 5 im Bereich der Befestigungsbohrungen 3 Stahlbuchsen 11 eingepreßt, die jeweils koaxial zu den Befestigungsbohrungen 3 ausgerichtet sind. Diese Stahlbuchsen 11 ermöglichen auch, die Radschrauben zur Befestigung von Rädern aus Stahl, Aluminium oder Magnesium zu vereinheitlichen.

## Patentansprüche

1. Leichtmetallrad, insbesondere für Kraftfahrzeuge, bei dem zumindest der Felgenteller im wesentlichen aus einem beim direkten Kontakt mit Stahl- oder Stahlgußteilen der Radanlage korrodierenden Leichtmetall, beispielsweise Magnesium, besteht und im Kontaktbereich mit der Radanlage isoliert ist, **dadurch gekennzeichnet**, daß der Kontaktbereich (4) des Felgentellers (1) zusammen mit dem Bereich der Befestigungsbohrungen (3) für die Radschrauben (6) aus einem beim direkten Kontakt mit Stahl- oder Stahlgußteilen nicht korrodierenden Leichtmetall, vorzugsweise Aluminium, gebildet ist.

2. Leichtmetallrad nach Anspruch 1**, dadurch gekennzeichnet**, daß der Kontaktbereich (4) zusammen mit dem Bereich der Befestigungsbohrungen (3) als eine in den Felgenteller (1) eingesetzte Aluminiumscheibe (5) ausgebildet ist, wobei Felgenteller (1) und Aluminiumscheibe (5) koaxial zueinander ausgerichtet sind.

3. Leichtmetallrad nach Anspruch 2, **dadurch gekennzeichnet**, daß die Aluminiumscheibe (5) durch Schraubmittel mit dem Felgenteller (1) verbunden ist.

4. Leichtmetallrad nach Anspruch 2, **dadurch gekennzeichnet**, daß die Aluminiumscheibe (5) in den Felgenteller (1) eingepreßt oder eingegossen ist.

5. Leichtmetallrad nach einem der Ansprüche 2 bis 4, **dadurch gekennzeichnet**a daß die Aluminiumscheibe (5) an der Verbindungsstelle (13) mit dem Felgenteller (1) rotationssymmetrisch ausgebildet ist.

6. Leichtmetallrad nach einem der Ansprüche 2 bis 5, **dadurch gekennzeichnet**, daß die Aluminiumscheibe (5) an der Verbindungsstelle (13) mit einer Anschlagfläche (7) versehen ist, welche mit einem Gegenanschlag (8) am Felgenteller (1) zusammenwirkt.

7. Leichtmetallrad nach einem der Ansprüche 2 bis 6, **dadurch gekennzeichnet**, daß am Außenumfang der Aluminiumscheibe (5) und am angrenzenden Innenumfang des Felgentellers (1) eine ineinandergreifende Verzahnung (10) vorgesehen ist.

8. Leichtmetallrad nach einem der Ansprüche 2 bis 7, **dadurch gekennzeichnet**, daß die Aluminiumscheibe (5) eine axiale Bohrung (9) für die Befestigung und/oder Zentrierung des Leichtmetallrades an einer Radnabe (12) der Radanlage (2) aufweist.

9. Leichtmetallrad nach einem der Ansprüche 2 bis 8, **dadurch gekennzeichnet**, daß in die Befestigungsbohrungen (3) an sich bekannte Stahlbuchsen (11) eingesetzt sind.

10. Leichtmetallrad nach Anspruch 9, **dadurch gekennzeichnet**, daß die Stahlbuchsen (11) in die Aluminiumscheibe (5) jeweils koaxial zu den entsprechenden Befestigungsbohrungen (3) eingepreßt oder eingegossen sind.

## Claims

1. Light metal wheel, in particular for motor vehicles, in which at least the rim disc is essentially made of a light metal which corrodes on direct contact with steel parts or steel castings of the wheel system, for example magnesium, and is isolated in the region of contact with the wheel system, characterised in that the region of contact (4) of the rim disc (1) together with the region of the fixing bores (3) for the wheel bolts (6) is formed from a light metal which does not corrode on direct contact with steel parts or steel castings, preferably aluminium.

2. Light metal wheel according to claim 1, characterised in that the region of contact (4) together with the region of the fixing bores (3) is constructed as an aluminium plate (5) inserted in the rim disc (1), rim disc (1) and aluminium plate (5) being oriented coaxially with each other.

3. Light metal wheel according to claim 2, characterised in that the aluminium plate (5) is connected by screw means to the rim disc (1).

4. Light metal wheel according to claim 2, characterised in that the aluminium plate (5) is pressed into or cast integrally in the rim disc (1).

5. Light metal wheel according to any of claims 2 to 4, characterised in that the aluminium plate (5) is constructed rotationally symmetrically at the junction (13) with the rim disc (1).

6. Light metal wheel according to any of claims 2 to 5, characterised in that the aluminium plate (5) is provided at the junction (13) with a stop face (7) which cooperates with a counterstop (8) on the rim disc (1).

7. Light metal wheel according to any of claims 2 to 6, characterised in that at the outer circumference of the aluminium plate (5) and at the adjoining inner circumference of the rim disc (1) are provided interlocking teeth (10).

8. Light metal wheel according to any of claims 2 to 7, characterised in that the aluminium plate (5) comprises an axial bore (9) for fixing and/or centring the light metal wheel on a wheel hub (12) of the wheel system (2).

9. Light metal wheel according to any of claims 2 to 8, characterised in that steel bushes (11) known in the art are inserted in the fixing bores (3).

10. Light metal wheel according to claim 9, characterised in that the steel bushes (11) are pressed into or cast integrally in the aluminium plate (5) in each case coaxially with the corresponding fixing bores (3).

## Revendications

1. Roue en alliage léger, en particulier pour véhicules automobiles, sur laquelle au moins le voile de jante est constitué essentiellement de métal léger, par exemple de magnésium, subissant une corrosion en cas de contact direct avec des pièces en acier ou en acier moulé du porte-roue, et est isolé dans la zone de contact avec le porte-roue, caractérisé par le fait que la zone de contact (4) du voile (1) est constituée, conjointement avec la zone des trous (3) pour les vis de fixation de roue (6), de métal léger, de préférence d'aluminium, ne subissant pas de corrosion en cas de contact direct avec des pièces en acier ou en acier moulé.

2. Roue suivant la revendication 1, caractérisée par le fait que la zone de contact (4) est réalisée, conjointement avec la zone des trous (3) pour les vis de fixation de roue (6), sous la forme d'un disque en aluminium (5) rapporté dans le voile (1), le voile (1) et le disque en aluminium (5) étant alignés coaxialement l'un par rapport à l'autre.

3. Roue suivant la revendication 2, caractérisée par le fait que le disque en aluminium (5) est relié par des moyens à vis au voile (1).

4. Roue suivant la revendication 1, caractérisée par le fait que le disque en aluminium (5) est emmanché à la presse dans le voile (1) ou y constitue un insert noyé de moulage.

5. Roue suivant l'une des revendications 2 à 4, caractérisée par le fait que le disque en aluminium (5) présente une forme de révolution à l'endroit de sa liaison (13) avec le voile (1).

6. Roue suivant l'une des revendications 2 à 5, caractérisée par le fait que le disque en aluminium (5) présente, à l'endroit de sa liaison (13) avec le voile 1, une surface de butée (7) coopérant avec une contre-butée (8) sur le voile (1).

7. Roue suivant l'une des revendications 2 à 6, caractérisée par le fait que des dentures (10) en prise l'une avec l'autre sont prévues sur le pourtour extérieur du disque en aluminium (5) et sur le pourtour intérieur contigu du voile (1).

8. Roue suivant l'une des revendications 2 à 7, caractérisée par le fait que le disque en aluminium (5) présente un trou axial (9) pour la fixation et/ou le centrage de la roue en métal léger sur un moyeu de roue (12) du porte-roue (2).

9. Roue suivant l'une des revendications 2 à 8, caractérisée par le fait que des douilles en acier (11) connues en soi sont rapportées dans les trous (3) pour les vis de fixation.

10. Roue suivant la revendication 9, caractérisée par le fait que les douilles en acier (11) sont emmanchées dans le voile (5) en aluminium ou y constituent des inserts noyés de moulage, coaxialement auxdits trous (3).
